Europäisches Patentamt

European Patent Office

Office européen des brevets

(19)

(11) Publication number: **0 000 227**

**A1**

(12)

# EUROPEAN PATENT APPLICATION

(21) Application number: 78200052.5

(22) Date of filing: 20.06.78

(51) Int. Cl.²: **G 03 B 41/18**

(30) Priority: 04.07.77 GB 27905/77

(43) Date of publication of application:
10.01.79 Bulletin 79/1

(84) Designated Contracting States:
BE DE GB

(71) Applicant: AGFA-GEVAERT Naamloze Vennootschap,
Septestraat 27,
B-2510 Mortsel (BE)

(72) Inventor: Stiévenart, Emile Frans,
Nachtegaallaan 6, 7a,
B-2710 Hoboken (BE)

(72) Inventor: Plessers, Hendrik Sylvester,
Achterstraat 41,
B-2573 Wychmaal (BE)

(72) Inventor: Neujens, Georges Jozef,
Gelmelenstraat 145,
B-2060 Merksem (BE)

(54) Device for storing and dispensing sheetlike materials.

(57) A device for storing and dispensing sheetlike materials comprises a coilable web (23) transferrable from one reel (20) onto another (22) and vice versa.

For the storing of the sheets (24), the latter are introduced between adjacent convolutions of the web during the winding-up cycle. Dispensing of the sheets occurs by unwinding the previously coiled web (23) so that the sheets (24) are released again. The web (23) is driven by a rotating feeding roller (21). Via a slip clutch (28,29) mounted on the reel driving shafts (20,22), the web (23) is kept tensioned.

As such, the problems of prior art systems, which make use of directly driven reels and which require a controlling of the coil diameter in order to store and dispense sheets at a uniform speed and tension, are avoided.

The system is mounted in a light tight housing (11) and forms part of an X-ray daylight system in which it is used as intermediate magazine for unloading radiographic cassettes.

2/3

*Fig. 3*

EP 0 000 227 A1

- 1 -

Device for storing and dispensing sheetlike materials.

The invention relates to a device for storing and dispensing material in the form of individual sheets.

For storing photographic film sheets a magazine has been proposed comprising a light-tight casing which has an entry slot for the film sheets and contains a flexible web which takes up the film sheets as they are introduced into the casing and causes them to become sandwiched between adjacent convolutions of the web as it winds onto a storage spool. On reverse winding of the web, i.e., on winding the web from the storage spool back onto a supply spool, the film sheets become dispensed from the magazine, through the same slot, in reverse order. The linear speed of the web, which determines the speed at which the film sheets are drawn into the magazine or dispensed therefrom as the case may be, is directly dependent on the speed of rotation of the spool onto which the web is wound for the time being. This spool is driven by an electric motor having automatic control circuitry for controlling its speed.

In the context of certain automated sheet handling or processing systems, the automatic storage of sheets at a storage station should take place at a constant input speed to the storage station. Similarly, when dispensing stored sheets, a constant sheet delivery speed is often required. When using a magazine con-

GV.949

0000227

structed and operating according to the above described prior proposal, a complicated automatic motor control circuitry is required. If the winding motor is driven at constant speed the linear speed of the sheet take-up and dispensing web increases as the diameter of the reel of web wound onto the driven spool increases.

The present invention provides a sheet storage and dispensing device employing a coilable-web sheet storage and dispensing system but wherein a constant web speed is achieved in a more simple manner.

According to the present invention, there is provided : a device for storing and dispensing material in the form of individual sheets, in which there is a web attached to first and second spools so as to be windable from one to the other of them and back again, means for guiding sheets to the path followed by the web between said spools to cause such sheets, when the web is wound onto the first spool, to be carried onto that spool between convolutions of the web thereon, one or more web-driving rollers engaging the web along a position along said path; means enabling said roller(s) to be positively and reversably driven, and slip clutches between said driving roller(s) and said spools to cause rotation of the web-driving roller(s) to be accompanied by rotations of said spools in directions and at speeds such as to keep the web tensioned along said path.

When using this device, the speed of the web is determined by the speed of rotation of the web-driving roller(s). For achieving a constant predetermined web speed over the entire winding of the web from the first spool to the second one or vice versa, the web-driving roller(s) is (are) driven at constant speed. The fact

GV.949

that the diameter of the reel of web on the take-up spool increases during this winding operation does not have to be taken into account. It is not necessary to provide complicated electrical or electronic devices for speed modulation purposes.

The web tension is maintained to avoid wrinkling or creasing of the web.

When the web is being wound onto the first spool (hereafter called "storage spool"), sheets fed in succession along the guide means are successively taken up by the web and carried onto the spool. When the web direction is subsequently reversed, the sheets are dispensed in reverse order along said guide means.

Devices according to the invention may be constructed and installed to operate storage-wise automatically in dependence on the approach of a sheet to the web path. For example the web-driving roller(s) may be automatically set in motion responsive to a signal emitted when a sheet to be stored moves into a certain position, e.g., a position in the sheet guide means. As an alternative the driving means for the web-driving roller(s) may operate intermittently at pre-determined intervals of time and for predetermined periods dependent on the setting of a timer.

Preferably the said web is the only web employed for the take-up and dispensing of sheets, and sheets fed into the device for storage become sandwiched directly between neighbouring convolutions of this web on the storage spool. However it is within the scope of the invention to provide a second web which is attached to the storage spool and a third spool, the arrangement being such that both webs wind onto the storage spool simultaneously, the convolutions of one web intervening between neighbouring convolutions of the other web.  In that case sheets fed into the device for
storage will become sandwiched between the two webs or
the storage spool.  Hereafter the use of a single web
will be primarily in view.

There is preferably a single web-driving roller which
drives the web by frictional engagement with one face
thereof.  The tension in the web between the spools must
in such device be sufficient to ensure that the
frictional driving force on the web is sufficient.

The invention includes devices wherein there is a
pair of web-driving rollers between which the web is
gripped.  If the sheets to be handled are of a nature
such that they might be spoiled if subjected to the
pressure exerted by such driving rollers the sheet
guiding means should guide the sheets to a position along
the web path which is downstream from such rollers.

The invention is of particular potential importance
for storing and feeding light-sensitive sheets, e.g.,
radiographic film sheets.  In preferred embodiments of
the invention, suitable for that purpose, the device
comprises a casing in which the web and associated spools
and driving roller(s) are accomodated and which has a
combined entry/discharge slot via which sheets can pass
to and from the web along the sheet guiding means, and
light-tight closure of such slot serves light-tightly to
enclose the casing.  Preferably closure means for light-
tightly closing said slot is provided as part of the
device, e.g., as a displaceable slot cover mounted on the
casing.  However the device may be designed for installation in juxtaposition to another appliance which ex-
cludes entry of light into the casing via said slot.

Preferred devices with a light-tightly closable
casing as above described can be used for storing
exposed light-sensitive film sheets or for dispensing unexposed ones, such as may be used in radiographic daylight systems.

The development of modern radiography has led to the design of systems which make conventional darkrooms superfluous. Daylight cassette loading and unloading devices have been designed which enable the conventional radiographic cassettes to be loaded with unexposed film and to be unloaded directly into a processing unit installed in a well-lit room.

As a result of such development a central processing unit may be used which is installed at a fixed location but not necessarily close to the room where radiographs are taken. It is therefore of value to employ a kind of intermediate unloader into which exposed radiographic film sheets unloaded from radiographic cassettes can be fed for temporary storage before being bulk-processed. Devices according to the invention can be constructed so as to be usable in such an unloader. In this way a substantial gain of time may be realized as the staff has no longer to unload the cassettes in a one-by-one fashion at the central processing unit.

Such a device can also be used with advantage when serial radiographic exposures have to be made. In such a situation the device may be loaded with unexposed film sheets and operated to feed such sheets in succession directly to the X-ray station where the radiographs are taken. The exposed films may be fed in sequence, e.g. by means of endless belts, through the exposure area (possibly in combination with intensifying screens) and be fed from that area into a second device according to the invention. Generally speaking, for radiographic systems, it is suitable to provide a device having a storage capacity of the order of 10 to 30 film sheets, of, say the 24x30 cm format.

GV.949

The casing (when provided) in devices according to the invention may be of any required shape, e.g. of generally rectanguloid or cylindrical form.

The web is preferably a polymeric material such as polyethylene terephthalate which has a sufficient mechanical strength even at small thicknesses.

In certain devices according to the invention the device comprises a casing with a sheet entry and discharge slot having a light-screening closure which opens automatically as the device is positioned in contact with an associated appliance so that the latter excludes light from such slot.

In order to increase the ergonomic properties of the device, the latter may be equipped with supplementary signalling means in order to indicate whether it is in loaded or in empty condition. Such signalling means may comprise photoelectric sensors which sense the presence or absence of inactinic radiation caused by the passage, in front of a suitable source, of the sheets to be dispensed or stored. In another preferred embodiment such signalling means comprise the use of metallic strips on the belt of flexible material which screen-off the magnetic flux emanating from a magnet so that magnetic field sensitive sensors may be energized or de-energized. Such metallic strips are provided at least in the vicinity of the front and rear edge of the web of flexible material and in this way may indicate the fact that either the supply spool or the storage spool is empty or not.

Although the invention is primarily intended for application to radiographic daylight systems, it can be used in the construction of storage and dispensing facilities for other purposes, e.g. a feeder in automatic punch-card operated banknote dispensers.

GV.949

The invention will be better understood by the description of a preferred embodiment in the light of following figures in which :

Fig. 1 shows a general perspective view of a device according to the invention

Fig. 2 is a sectional view of the device of fig. 1 according to the section line 2-2'

Fig. 3 shows the roller and spool driving mechanism

Fig. 4 is an alternative embodiment of a detail cf fig. 3

Fig. 5 illustrates the mechanism for controlling the screening off of the entrance slot from ambient light

Fig. 6 shows a cross-sectional view of fig. 5 according to the section line 6-6'.

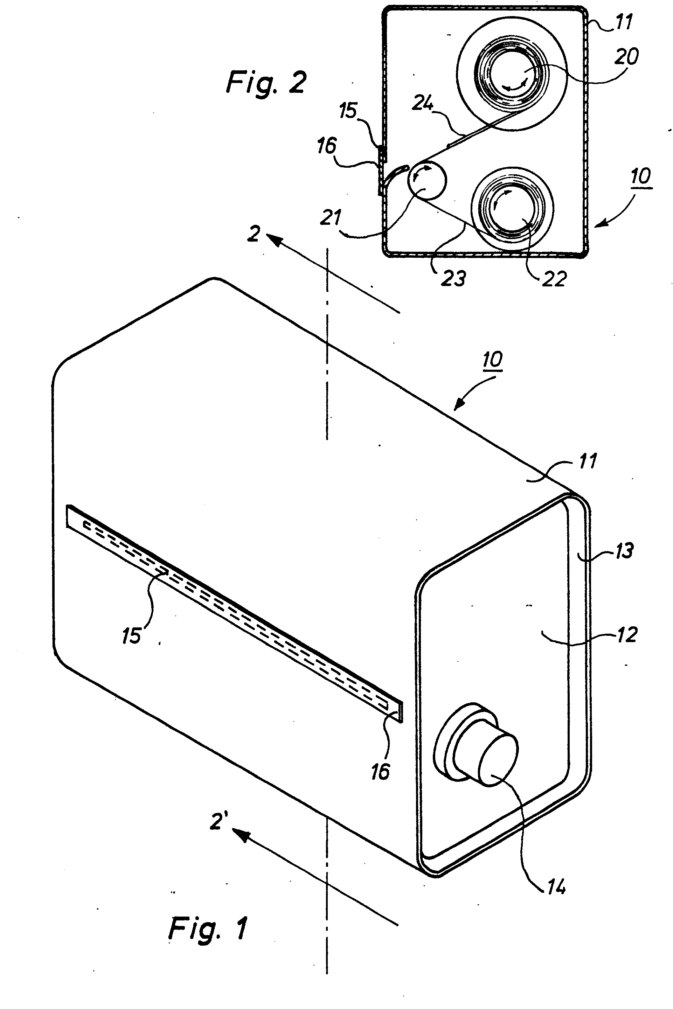

As may be derived from fig. 1, the device in form of a magazine 10 according to the invention comprises a body member 11 of constant cross-section in which side-walls (only the wall 12 being shown) are provided. The side-walls may be spaced from the edge of the body member so that a gripping edge 13 is left which facilitates the transportation and the positioning of the magazine 10 in view. At one side-wall 12 a motor 14 may be provided for driving a sheet feeding mechanism located in the housing 11 which mechanism will be described in detail hereinafter. In order to feed sheets into or to dispense sheets out of the magazine 10, an entrance slot 15 is provided therein which is masked by a strip 16 of light screening material in case light-sensitive film sheets are treated. Details about the functioning of said light screening means will also be dealt with further in the description.

The cross-section of the magazine - here illustrated as being rectangular - can be selected depending on the apparatus with which it will be combined in functional relationship.

In the interior of the magazine 10, illustrated in sectional view in fig. 2 are provided storage spool 20, driving roller 21 and supply spool 22. A web 23 passes from the supply spool 22 over the driving roller 21 to the storage spool 20 in such a way that the web winds from one spool to the other when such spools are rotated in opposite directions.

Film sheets 24 are fed to the interior of the magazine 10 via entrance slot 15 in such a way that they become positioned upon the web 23 and are carried along to the storage spool 20 where they are gripped between adjacent convolutions of the web 23. When the magazine 10 is unloaded, the reverse action takes place, in that the sense of rotation of web-driving roller 21 is reversed so that the film sheets 24 emerge from between the convolutions on storage spool 20 and are delivered at the entrance slot 15 in order to undergo further treatments.

The control of the period that the web-driving roller 21 must be rotated may occur by means of a detecting mechanism detecting the passage of the trailing edge of a sheet to be stored in front of it. In order to guarantee that the sheet has completely disappeared in the magazine, a delay mechanism may be provided which stops the web-driving roller a small lapse of time after the detection process.

The web-driving roller may be started as a consequence of an analogous process, in this way detecting the passage of the leading edge of a sheet.

In so doing there is a sufficient and a constant distance between the sheets when stored.

Dispensing of the sheets may occur in a similar

GV.949

fashion.

Driving roller 21 may be rotated at constant speed by a motor 14 (shown in fig. 1) in either direction so that the web 23 may be fed from the supply spool 22 via driving roller 21 towards the storage spool 20 or vice versa.

The web 23 is fixed by its ends to the spools 20, 22 so that nearly the total length of the web can be transferred from the supply spool 22 towards the storage spool 20. Sheets 24 which are introduced into the housing 11 via the entrance slot 15 become positioned on the part of the web 23 extending between the driving roller 21 and the storage spool 20. As a consequence of the movement imparted to the web 23 the film sheets become sandwiched between adjacent convolutions of the web 23 as it winds onto the storage spool. The number of sheets which may be stored is dependent on the total length of web 23 which can be wound onto storage spool 20. The space available in the magazine must be sufficient to accomodate that length of web and the film sheets held thereby which of course increase the diameter of the web coil. With respect to a magazine according to the invention intended to be used for storing X-ray films, a suitable storing capacity for the magazine is, e.g. between 10 and 30 film sheets of 24 x 30 cm format.

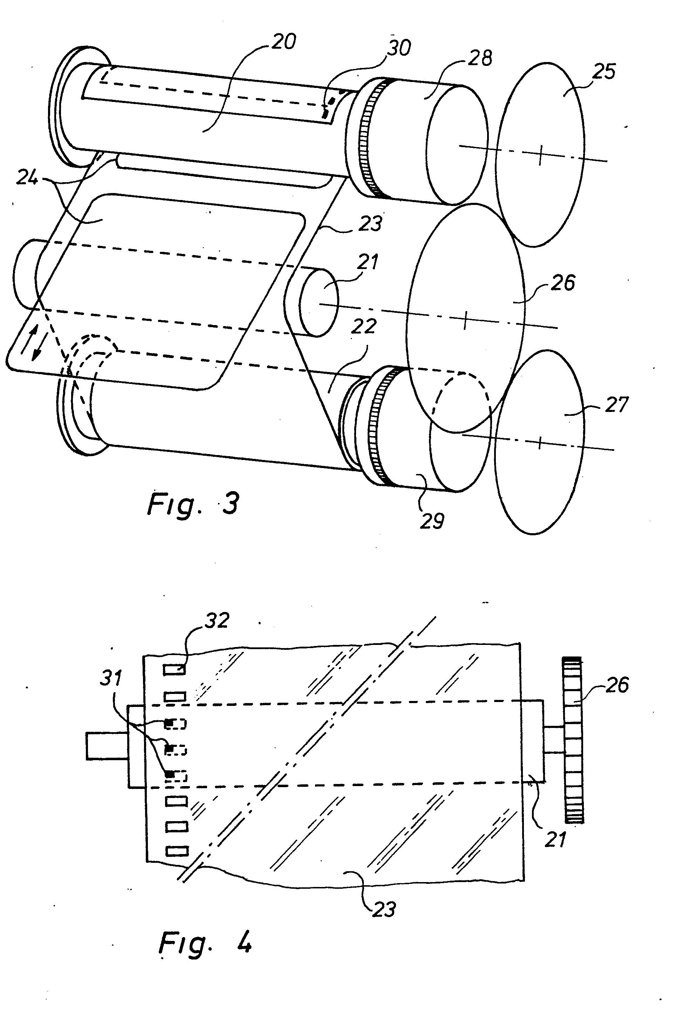

Fig. 3 is a perspective view of the mechanism for driving the spools 20, 22 and roller 21.

The driving of the spools 20, 22 occurs through the intermediary of gears 25, 26, 27 of which only the pitch circles have been represented for simplicity's sake.

Gear 25 is coupled with the storage spool 20 via a friction coupling 28; gear 27 is coupled with the cupply spool 22 via a friction coupling 29.

GV.949

When sheets are being fed towards the storage spool 20, the latter will be rotated in an anti-clockwise direction (in the aspect of fig. 2) through the intermediary of gear 25. Gear 27 will also be rotated anti-clockwise, but due to the presence of friction coupling 29, the supply spool 22 will be rotated clockwise by the pulling force exerted on the web. The reverse rotation of coupling 29 exerts a braking force on the web 23, so that the latter will always be tensioned against the pulling force exerted by web driving roller 21. This results in an even winding cycle on storage spool 20, so that the possibility and the occurrence of wrinkling and welting of the web are avoided.

During the sheet dispensing cycle, the sense of rotation of the web driving roller 21 is reversed. During that reverse travel of the web coupling 28 is rotated in a clockwise direction to exert a braking force on the web as it is unwound from spool 20 and problems arising from wrinkling of the web are likewise avoided.

The web 23 used in a preferred embodiment for dispensing radiographic films, comprises a polymer layer, such as polyethylene terephthalate onto which an electroconductive layer has been coated in order to reduce electrostatic charge building-up of the films. Such antistatic layer has as main constituent a dispersion of carbon-black in a suitable dispersing agent such as an aqueous gelatin solution. This amount of carbon-black may be as high as 30 % by weight.

In order to get an indication when one winding traverse of the web is complete, a signalling means 30 may be provided near the end of the web 23. This signalling means 30 may comprise a ferro-metallic

strip which intercepts the field lines emanating from a small permanent magnet located close to the web. The presence or absence of the magnetic field may be detected by a sensor located in front of the source at the other side of the web.

Alternative signalling means may be found in opto-electronic devices, counting the number of sheets 24 passing in front of it thereby to interrupt a beam of radiation falling onto a photo-sensor. It will be clear, however, that if radiographic films are counted, the radiation involved in such systems must fall outside the spectral sensitivity range of the film sheets.

If the frictional coefficient of the web 23 versus the web-driving roller 21 should be too low, slipping might occur between the web 23 and the web-driving roller 21. The web-driving roller 21 can if required be provided with at least one row of teeth 31 (see fig. 4) which engage equispatially arranged perforations 32 provided along at least one longitudinal margin of the web 23.

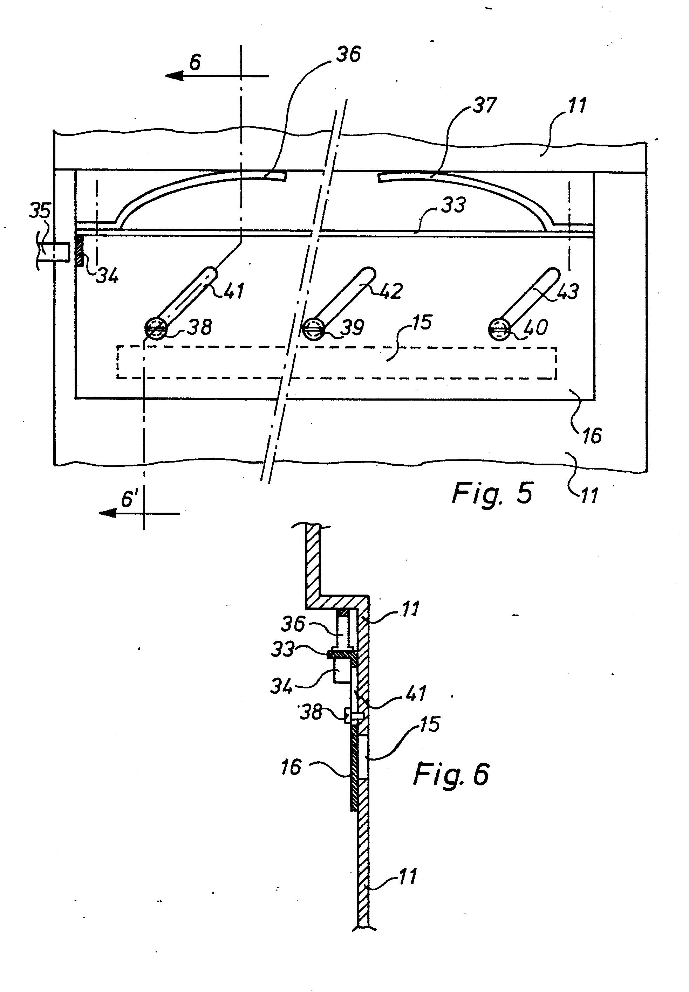

Figs. 5 and 6 illustrate how the light screening means of the entrance slot 15 is operated.

The entrance slot 15 provided in housing 11 is masked by a strip of metallic or polymeric material 16. The said strip has a forwardly projecting flange 33 along its top edge. A pair of springs 36, 37 secured to that flange bear against a projecting portion of the housing 11. A stop or lug 34 is provided at one end of the strip 16. The magazine is intended to be installed next to a receiving apparatus. During such installation an abutment member 35 on the frame of that receiving apparatus abuts against that lug and pushes the strip 16 laterally relative to the magazine housing. The strip carries a plurality of pins 38, 39, 40 which engage in inclined grooves 41, 42 and 43 in the front face of the housing 11. In consequence the lateral force exerted by the abutment member 35 causes the strip 16 to move obliquely upwardly parallel with those grooves into a position in which the entrance slot 15 is completely uncovered. When the magazine is removed from the aforesaid receiving apparatus, the springs 36 and 37 restore the strip 16 to its original position in which it light-tightly closes the entrance slot 15.

One particular magazine according to the invention, used as a dispenser for unexposed radiographic films, had the following characteristics :
- storing capacity : 30 films of the 24 x 30 cm format, the longest side of which being parallel with the edges of the web and spaced 5 cm from each other,
- length of the web : 10 meters, width = 42 cm,
- width of the entrance slot : 43 centimeters,
- dispensing speed : 15 cm of web per second,
- power consumption of the driving motor : 6 Watts.

Due to its simplicity the described magazine works very reliably.

The magazine as described can be modified in numerous ways. For example, the whole gear mechanism may be located externally rather than internally of the housing. The driving of the spools and the web driving roller may be performed with endless belts instead of with conventional gear wheels as illustrated and described. If the magazine receiving device itself is provided with a driving shaft or motor, the latter may be directly coupled with the shaft of the web driving roller, so that a separate motor for operating the magazine is not required.

GV.949

- 1 -

WHAT WE CLAIM IS :

1. A device for storing and dispensing material in the form of individual sheets, in which device there is a web attached to first and second spools so as to be windable from one to the other of them and back again, means for guiding sheets to the path followed by the web between said spools to cause such sheets, when the web is wound onto the first spool, to be carried onto that spool between convolutions of the web thereon, one or more web-driving rollers engaging the web along a position along said path; means enabling said roller(s) to be positively and reversably driven, and slip clutches between said driving roller(s) and said spools to cause rotation of the web-driving roller(s) to be accompanied by rotations of said spools in directions and at speeds such as to keep the web tensioned along said path.

2. A device according to claim 1, in which said slip clutches are in the form of friction couplings.

3. A device according to claim 1 or 2 in which said web is a web of polyester.

4. A device according to claim 3 in which said web is provided with an electroconductive coating.

5. A device according to any of claims 1 to 4, in which said web is provided with at least one row of equispatially arranged perforations in the vicinity of one of its edges, which perforations engage teeth, provided on

GV.949

0000227

the or a said web-driving roller.

6. A device according to any of claims 1 to 5, which in addition comprises a casing in which the web and associated spools and driving roller(s) are accomodated and which has an entry and discharge slot via which sheets can pass to and from the web along the sheet guiding means, and light-tight closure of said slot serves to light-tightly enclose the casing.

7. A device according to any of claims 1 to 6 which comprises signalling means which indicates when the web has come to the end of its travel in one or the other direction.

8. A device according to claim 7, in which said signalling means comprise a source of a magnetic field, a magnetic field responsive element and a strip of magnetic field intercepting material fixedly secured at given locations of said web.

9. A device according to any of claims 1 to 8, when used for storing or dispensing exposed or unexposed radiographic film sheets.

GV.949

*Fig. 2*

*Fig. 1*

Fig. 3

Fig. 4

0000227

Fig. 5

Fig. 6

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | G 03 B 41/18 |
| | FR - A - 2 102 441 (COMP. GENERALE DE RADIOLOGIE) <br><br> * Page 2, lines 27-38; pages 3,4; figures 1-3 * <br><br> ---- | 1-4,6, 9 | |
| | FR - A - 2 135 841 (COMP. GENERALE DE RADIOLOGIE) <br><br> * Page 3, lines 14-37; page 4, lines 1-4; page 6, lines 33-39; pages 7-9; figures 1-7 * <br><br> ---- | 1-4,6, 7,9 | |
| | US -A - 3 961 760 (T.F.ARNOLDUSSEN) <br><br> * Column 1, lines 55-68; Columns 2,3; figures 1-3 * <br><br> ------- | 1,5,6, 9 | **TECHNICAL FIELDS SEARCHED (Int.Cl.²)** <br><br> G 03 B 41/16 <br> G 03 B 41/18 |

**CATEGORY OF CITED DOCUMENTS**

X: particularly relevant
A: technological background
O: non-written disclosure
P: intermediate document
T: theory or principle underlying
  the invention
E: conflicting application
D: document cited in the
  application
L: citation for other reasons

&: member of the same patent
  family,
  corresponding document

The present search report has been drawn up for all claims

| Place of search | Date of completion of the search | Examiner |
|---|---|---|
| The Hague | 05-10-1978 | BOEYKENS |

EPO Form 1503.1 06.78